# EUROPEAN PATENT APPLICATION

(11) **EP 4 385 320 A1**
(43) Date of publication of application: **19.06.2024**
(21) Application number: 23204665.6
(22) Date of filing: 19.10.2023
(51) Int. Cl.: A01K 1/015

(54) **INSERT ELEMENT FOR A STABLE FLOOR ELEMENT**

(30) Priority: 15.12.2022 BE 202206019
(71) Applicant: VDV R&D BV, 2280 Grobbendonk (BE)
(72) Inventor: VAN DER VELDEN, Dominique, 2280 Grobbendonk (BE)
(74) Representative: Archimedes Patents BVBA

(57) **Abstract**

An insert element is provided to be inserted in a stable floor element with a passage (4) which extends from the usage area (15) down to a bottom surface, the insert element (1) comprising
- a first section (3) made from a non-elastic synthetic material with a top surface, side surfaces and a bottom surface,
- a second section (2) made from an elastomer that covers the exposed top surface of the first section (3) and is provided with a free upperside. Characteristic is that the non-elastic section (3) of the insert element is provided with one or several perforations (8) that extend from the top surface to the bottom surface, and the elastic section (2) is provided with one or several protrusions (6) that extend through the perforations in the non-elastic section and protrude outwardly from the bottom surface of the non-elastic section.

## Description

The present invention relates to an insert element for a stable floor element, and a stable floor element provided with such insert element.

Stable floors made from a grating of typical rectangular stable floor elements are already known. Essentially, a stable floor element consists of a grid made from concrete, constructed from slats arranged at a distance from each other and mutually connected by means of transverse slats, also made from concrete. It is essential that the cows have sufficient grip when walking on the stable floor. To this end grooves are often applied in the upperside of the stable floor element. Moreover, holes are provided between the slats which form a passage for the drainage of excrements to a pit that is usually provided under such stable floor element.

A stable floor consisting of such known stable floor elements is cleaned by regularly scraping the floor, be it manually or automatically by a manure robot or a slide, whereby the scraped off excrements are also discharged via the holes between the slats into the underlying pit.

A disadvantage of said known concrete stable floors is that cows can still easily slip. This particularly applies when the cows are restless or are rushed, for example, or cows whose claw position is not good and the pressure on the claws is not evenly distributed. Moreover, when the cows slip and fall they land on a hard concrete floor which may result in injuries.

For the sake of animal welfare it is known to provide rubber mats on the walking surface of said concrete stable floor elements. In line with the passages provided in the stable floor elements, said mats are provided with corresponding cut-aways such that the passage of the excrement is not obstructed. The disadvantages of this consist in that the attachment of the mats to the stable floor is cumbersome and often impractical. This means that in practice said mats may shift through use or when scraping.

BE101808A3 discloses a stable panel whereby a concrete grid is combined with inserts made from rubber or an elastic synthetic material, to increase animal welfare. This prevents the rubber or elastic synthetic material from shifting. The excrements, manure and urine, are discharged to a cellar under the floor, through holes in the rubber or elastic synthetic material. Although this solution certainly has its merits, there are also disadvantages. The production process for forming the rubber inserts requires a lot of energy. Moreover, although the compressibility of the rubber absolutely is a factor that improves the grip and is thus conducive to animal welfare, the compression of the inserts under load is a point of attention. Indeed, in case of too great a compression the cow can still get injured if the animal's relevant leg sinks too deeply. US20090050070 A1 relates to a mat for a slatted floor. The mat, as disclosed in US20090050070 A1, has a rigid base made from plastic on which the mat rests when in use. In the underside of the rigid base, surface irregularities may be provided to, when in use, prevent shifting of the mat on the slatted floor. On the upperside of the rigid base a flexible core is applied which is covered with an outer skin.

The purpose of the present invention is to provide an alternative that provides a solution to at least one of the aforementioned and other disadvantages.

To this end, the invention relates to an insert element to be inserted into a passage of a stable floor element via an upperside, whereby the passage extends from a usage area located on the upperside of the stable floor element to a bottom surface located on an underside of the stable floor element, the insert element comprising
- a first section made from a non-elastic synthetic material with a top surface, side surfaces and a bottom surface,
- a second section made from an elastomer that covers the exposed top surface of the first section and is provided with a free upperside.

Characteristic is that the non-elastic section of the insert element is provided with one or several perforations that extend from the top surface to the bottom surface, and the elastic section is provided with one or several protrusions that extend through the perforations in the non-elastic section and protrude outwardly from the bottom surface of the non-elastic section.

As the protrusions of the elastic section are made from elastomer, the described configuration of the insert element allows the insert element to be inserted in the passage of the stable floor element, with the bottom surface of the non-elastic section facing the bottom surface of the stable floor element, such that the elastic protrusions of the insert element rest on the stable floor element. When in use, the cow is only in contact with the elastic material of the elastic section on the upperside of the insert element. Moreover, the elastic section of the insert element touches the stable floor element via the protrusions extending through the perforations of the non-elastic section at the bottom surface. This means the compressibility and damping of the insert element offer the necessary grip and comfort, however without the known disadvantages of an insert element that is only composed of an elastic material.

In addition, optionally the elastic section of the insert element can be provided with one or several elastic protrusions that extend laterally outwardly relative to the non-elastic section of the insert element and at least partially cover the corresponding side surface of the non-elastic section. This supports the fittingly elastic lateral clamping of the insert element in a passage of the stable floor element, and/or depending on the form of the passage, the insert element can at least partially rest on the walls of the passage through contact with said lateral protruding elastic protrusions.

The free upperside of the elastic section of the insert element is substantially flat. By providing transversal grooves in the elastic section of the insert element on the free upperside, the grip is further improved. Preferably, said transversal grooves have an inward inclination. Such transversal grooves also facilitate the drainage of excrements to the space below the stable floor through one or several through-holes in the insert element which extends or extend from the free upperside of the elastic section to the bottom surface of the non-elastic section.

Typically, the non-elastic and elastic sections are made from injection-moulded thermoplastic materials. The elastic section is made from an elastomer such as, for example, rubber or vulcanised rubber. Preferably, the non-elastic synthetic material of the non-elastic section is a wear-resistant, recyclable material that is highly resistant to moisture. An example of such material is polypropylene. Moreover, polypropylene is a light material with bacteria-resistant properties which makes it very suitable for use in stables.

The invention also relates to a stable floor element. The stable floor element comprises at least one insert element, as specified in the abovementioned embodiments or a combination thereof, and a bearing element. The bearing element is provided with one or several passages which extend from a usage area located on the upperside of the bearing element to a bottom surface located on an underside of the bearing element, whereby the insert element is applied in at least one of said passages. Typically, a bearing element substantially consists of a grid made from concrete, constructed from slats arranged at a distance from each other and mutually connected by means of transverse slats, also made from concrete. Passages are provided between the slats.

The passages taper down from the usage area to the bottom surface located opposite. Typically, to increase the grip, the bearing element is provided with grooves in the usage area.

The passages in the bearing element are at least partially delimited by two opposite facing sidewalls. The configuration can be chosen such that, for example because the sidewalls taper at least partially toward each other from the usage area to the bottom surface, the insert element at least partially rests on the sidewalls. Alternatively or additionally, the passages are at least partially delimited by at least one bearing wall which is oriented in a parallel or practically parallel way relative to the usage area, such that the insert element at least partially rests on said bearing wall.

In an embodiment the passages are configured such they show a cross-section which, from the usage area to the bottom surface, first show a substantially constant breadth between the sidewalls, subsequently taper down according to a direction transverse or practically transverse to the sidewalls, to finally reach down to the bottom surface with a substantially constant breadth.

In a further embodiment, the free top surface of the elastic section of the insert element and the usage area lie substantially in the same plane. This has the advantage that scraping the stable floor can be done efficiently.

With the intention of better showing the characteristics of the invention, a preferred embodiment of the insert element and the stable floor element provided with said insert element according to the invention is described hereinafter, by way of an example without any limiting nature, with reference to the accompanying drawings wherein:

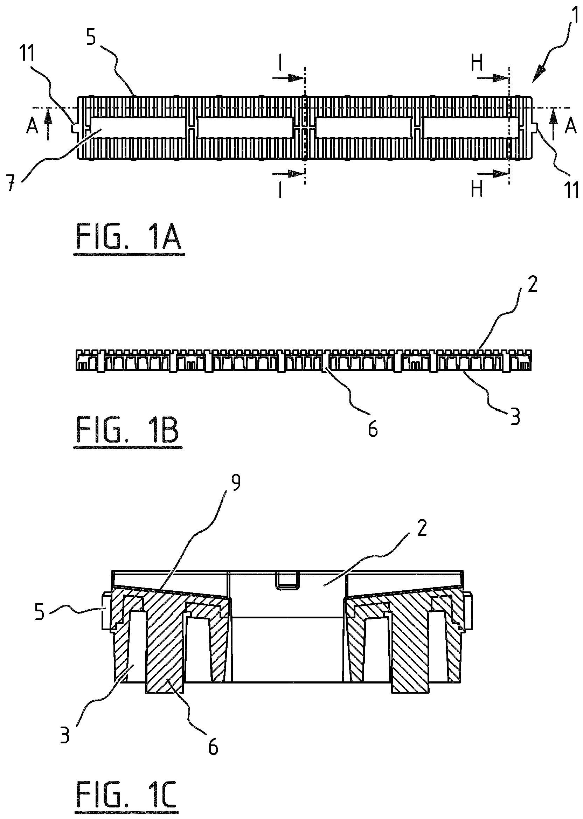

Figure 1a schematically shows a top view of an insert element according to an embodiment of the invention;
Figure 1b shows a view of a longitudinal section of
Figure 1a according to line A-A;
Figure 1c shows a view of a cross-section of Figure 1a according to line H-H;
Figure 1d shows a view of a cross-section of Figure 1a according to line I-I;
Figure 2 schematically shows a top view of a first section of the insert element, as shown in Figure 1a;
Figure 3 schematically shows a perspective view of a section of a bearing element of a stable floor element according to an embodiment of the invention;
Figure 4 shows a view of a cross-section of a bearing element as shown in Figure 3 on the level of a location between two transverse slats.

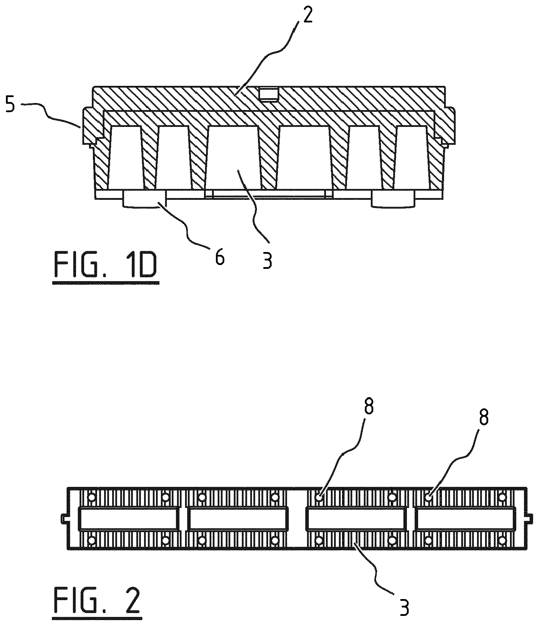

Figures 1a-1d show an insert element 1. The insert element is composed of two sections. Both sections are made from injection-moulded thermoplastic materials. A first non-elastic section 3 (as also shown in figure 2) is made from polypropylene. A second elastic section 2 is made from vulcanised rubber.

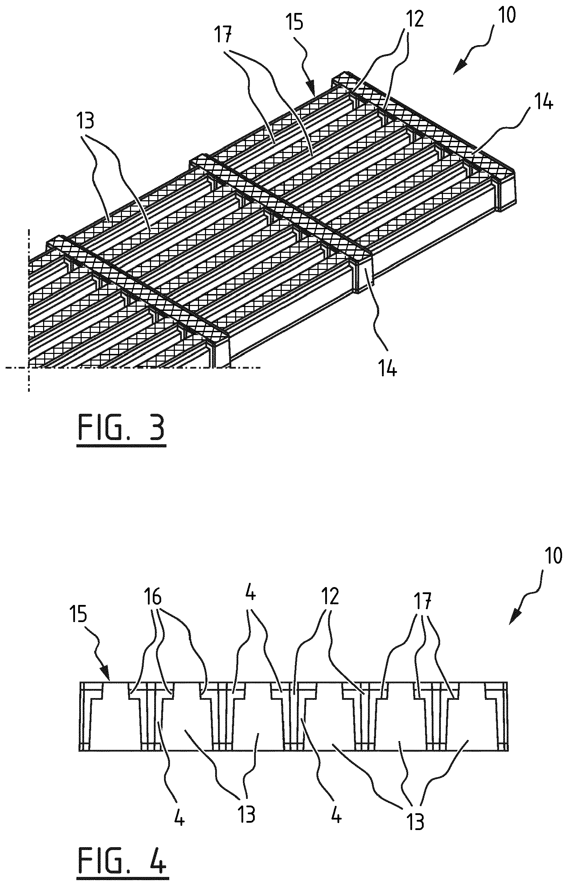

The insert element 1 is intended to be inserted via an upperside in a passage 4 of a bearing element 10 of a stable floor element. The upperside is the side which during use of the stable floor element is located at the top. The bearing element 10 is shown in figures 3 and 4. The passage 4 extends from a usage area located on the upperside of the bearing element to a bottom surface located on an underside of the bearing element. The design and the sizes of the insert element 1 are aligned to match the form and dimensions of the passage 4 such that the insert element 1 can be fittingly applied in the passage 4.

In the embodiment shown, the insert element 1 is oblong-shaped. Through-holes 7 are provided in the insert element which are centrally positioned in the transversal direction extending substantially lengthways of the insert element.

Preferably, the length and breadth of the elastic section 2 of the insert element are greater than the respective length and breadth of the non-elastic section 3. The insert element is formed by overlappingly applying the elastic section 2 to the non-elastic section 3 such that the upperside of the insert element 1 is the upperside of the elastic section 2. In the example shown, the sidewalls of the elastic section partially span the sidewalls of the non-elastic part.

The through-holes 7 consist of a passage through the elastic section and a passage through the non-elastic section which are aligned and positioned relative to each other such that the upperside of the passage through the non-elastic section overlaps the underside of the passage through the elastic section. When in use this results in a smooth passage of excrements and avoids any accumulation at the transition between both sections. The through-holes 7 in the insert elements 1 can be made wider or narrower, can be slit-shaped or show other forms and instead of a rectangular edge be provided with a polygonal or a curved edge. The form and dimensions of the holes 7 can also be adapted to the type of animals for which the insert elements 1 are intended.

The elastic section 2 of the insert element 1 is provided with protrusions 5,6 that protrude outward relative to the non-elastic section 3. Said protrusions comprise peripheral protrusions 5 which extend past the corresponding side surface of the non-elastic section and protrusions 6 that extend past the bottom surface of the non-elastic section. The peripheral protrusions 5 at least partially overlap the corresponding sidewall of the non-elastic section. The substantially cylindrical or conical protrusions 6 at the bottom and the perforations 8 in the non-elastic section are aligned such that the protrusions 6 fittingly protrude through the perforations 8. By choosing a diameter of said protrusions 6 greater than the corresponding diameter of the perforations 8, the protrusions 6 can at least be partially clamped in the perforations 8. The clamping makes a possible lateral shift of the elastic section 2 relative to the non-elastic section 3 difficult.

On the upperside in the elastic section 2, the insert element 1 is provided with transversal grooves 9 which have an inward inclination and thereby facilitate the transport of excrements to the holes 7.

On its transverse sides, the insert element 1 is further provided with an outwardly oriented tongue 11. The tongue consists of a part that protrudes from the non-elastic section and in addition a part that protrudes laterally on the same level or preferably slightly further than the non-elastic part of the tongue. Preferably, the sidewalls of the elastic part of the tongue at least partially span the outward facing sidewalls of the non-elastic part of the tongue. The form and dimensions of the tongue 11 are aligned to match the form and dimensions of a groove 12 in the bearing element 10 such that when in use, when the insert element 1 is inserted in the bearing element 10 an appropriate tongue-groove connection is formed.

Figures 3 and 4 show a bearing element 10 of a stable floor element in the form of a floor grid. Essentially, a floor grid consists of a grid made from concrete, constructed from slats 13 arranged at a fixed distance from each other in parallel and mutually connected by means of transverse slats 14, also made from concrete. The passages 4 are provided between the slats.

The bearing element 10 may, but does not necessarily have to show a substantially rectangular peripheral edge. The bearing element 10 may also be a floor slab that is cast on site, for example.

The slats 13 of the shown floor grid 10 broaden from the top side of the floor grid or usage area 15 to the opposite bottom surface such that consequently the passages 4 taper down from the usage area 15 of the floor grid towards the opposite bottom surface. In the example shown the broadening is such that the sidewalls 16 of the slats 13 show a substantially stepped profile. The resulting substantially flat section of the sidewall is referred to as the bearing wall 17. The bearing wall 17 is practically parallel with the usage area 15. The remaining section of the sidewall 16 as shown in figure 4 is slanted. However, alternatively the remaining part of the sidewall 16 can be practically perpendicular to the usage area or provided with slanted and practically perpendicular sections. For one of the opposite sidewalls 16 the bearing wall 17 can also be left out for the sake of a passage 4.

Insert elements 1 as shown in figures 1 and 2 can simply be fittingly applied from the upperside in the passages 4 of the bearing elements 10 as shown in figures 3 and 4 with the bottom surface of the non-elastic section 3 facing the bottom surface of the bearing element. When applying the insert elements 1 in the passages 4, tongue-groove connections are formed because the tongues 11 of the insert elements slide into the respective grooves 12 of the bearing elements. This prevents rotating of the insert elements 1 in the passages 4.

The uppersides of the inserted elements lie practically in the same plane as the usage area or may also protrude somewhat outwardly as long as this does not interfere with sweeping the stable floor or it does not result in damage to the rubber. Strips of concrete and rubber then alternate the usage area. The purpose of the alternating concrete and rubber strips is situated in the field of animal welfare, the wear and tear of hooves or claws, and better grip.

The inserted insert elements 1 touch the sidewalls 16 of the bearing element 10 only with the elastic section 2 and more specifically substantially via the protrusions 5,6. The insert elements hereby rest more specifically on the bearing walls 17 via the bottom protrusions 6. In case of a load on the insert element, said configuration results in a good elastic damping.

The present invention is not limited to embodiments whereby a bearing wall 17 is formed, in other words a sidewall 16 with a stepped profile. The sidewall may or may not have a partially or wholly slanted or curved profile. In that case the insert elements thus particularly rest on the slanted or curved sections of the sidewall 16 via one or several of the protrusions 5,6.

The present invention is not limited to embodiments whereby the bearing wall or bearing walls 17 are flat, but, said bearing wall or bearing walls 17 may also show a curved surface.

The present invention is by no means limited to the embodiments described as an example and shown in the drawings, but an insert element and a stable floor element provided with such insert element according to the invention can be realised in all kinds of forms and dimensions without departing from the scope of the invention.

## Claims

1. - Insert element to be inserted into a passage (4) of a stable floor element via an upperside, whereby the passage (4) extends from a usage area (15) located on the upperside of the stable floor element to a bottom surface located on an underside of the stable floor element, the insert element (1) comprising
- a first section (3) made from a non-elastic synthetic material with a top surface, side surfaces and a bottom surface,
- a second section (2) made from an elastomer that covers the exposed top surface of the first section (3) and is provided with a free upperside, **characterised in that** the first section is provided with one or several perforations (8) which extend from the top surface to the bottom surface and the second section (2) is provided with one or several protrusions (6) which extend through the perforations (8) and protrude outwardly from the bottom surface of the first section (3).

2. - Insert element according to claim 1, **characterised in that** the insert element (1) is provided with one or more through-holes (7) which extends or extend from the free upperside of the second section (2) to the bottom surface of the first section (3).

3. - Insert element according to any one of the previous claims, **characterised in that** the second section (2) of the insert element (1) on the free upperside is provided with transversal grooves (9).

4. - Insert element according to claim 3, **characterised in that** the transversal grooves (9) have an inward inclination.

5. - Insert element according to any one of the previous claims, **characterised in that** the second section (2) comprises one or several protrusions (5) which extend laterally outwardly and at least partially cover the corresponding side surface of the first section (3).

6. - Insert element according to any one of the previous claims, **characterised in that** the non-elastic synthetic material is a thermoplastic material.

7. - Insert element according to any one of the previous claims, **characterised in that** the non-elastic synthetic material is polypropylene.

8. - Stable floor element that comprises at least one insert element according to any one of the previous claims and a bearing element (10), whereby the bearing element (10) is provided with one or several passages (4) which extend from a usage area (15) located on the upperside of the bearing element (10) to a bottom surface located on an underside of the bearing element (10), whereby the insert element (1) is applied in at least one of said passages (4).

9. - Stable floor element according to claim 8, **characterised in that** the passages (4) taper down from the usage area (15) towards the opposite bottom surface.

10. - Stable floor element according to claim 9, **characterised in that** the passages (4) are at least partially delimited by two opposite facing sidewalls (16) on which the insert element (1) at least partially rests.

11. - Stable floor element according to any one of the claims 8 or 9, **characterised in that** the passages (4) are at least partially delimited by two opposite facing sidewalls (16) and at least one bearing wall (17) which is oriented in a parallel or practically parallel way relative to the usage area (15), such that the insert element (1) at least partially rests on said bearing wall (17).

12. - Stable floor element according to claim 11, **characterised in that** the passages (4) show a cross-section which, from the usage area (15) to the bottom surface, first show a substantially constant breadth between the sidewalls (16), subsequently taper down according to a direction transverse or practically transverse to the sidewalls (16), to finally reach down to the bottom surface with a substantially constant breadth.

13. - Stable floor element according to any one of the claims 8 to 12, **characterised in that** the free top surface of the second section (2) of the insert element (1) and the usage area (15) lie substantially in the same plane.

14. - Stable floor element according to any one of the claims 8 to 13, **characterised in that** the bearing element (10) is provided with grooves (12) in the usage area (15).
